(19) **Europäisches Patentamt**
**European Patent Office**
**Office européen des brevets**

(11) **EP 0 962 506 B1**

(12) **EUROPEAN PATENT SPECIFICATION**

(45) Date of publication and mention
of the grant of the patent:
**06.03.2013 Bulletin 2013/10**

(51) Int Cl.:
***B32B 27/30*** (2006.01)   ***C08J 7/04*** (2006.01)
*C09D 129/04* (2006.01)   *C08K 5/098* (2006.01)

(21) Application number: **99109385.7**

(22) Date of filing: **02.06.1999**

(54) **Laminate and method for producing it**

LAMINAT UND HERSTELLUNGSVERFAHREN

Stratifié et méthode pour le préparer

(84) Designated Contracting States:
**DE FR GB IT**

(30) Priority: **03.06.1998 JP 15432998**
**03.06.1998 JP 15433098**

(43) Date of publication of application:
**08.12.1999 Bulletin 1999/49**

(73) Proprietor: **KURARAY CO., LTD.**
**Kurashiki City, Okayama Prefecture 710 (JP)**

(72) Inventors:
• **Takada, Shigeki**
**Kurashiki-city,**
**Okayama-pref. (JP)**
• **Shiraga, Saahiko**
**Kurashiki-city,**
**Okayama-pref. (JP)**

(74) Representative: **Vossius & Partner**
**Siebertstrasse 4**
**81675 München (DE)**

(56) References cited:
**EP-A- 0 386 720     EP-A1- 0 386 720**
**US-A- 4 544 698     US-A- 4 544 698**

• **CHEMICAL ABSTRACTS, vol. 127, no. 20, 17 November 1997 (1997-11-17) Columbus, Ohio, US; abstract no. 279753, XP002114315 & JP 09 241999 A (KURARAY CO., LTD.) 16 September 1997 (1997-09-16)**
• **CHEMICAL ABSTRACTS, vol. 125, no. 18, 28 October 1996 (1996-10-28) Columbus, Ohio, US; abstract no. 224104, XP002114316 & JP 08 188624 A (KURARAY CO, JAPAN) 23 July 1996 (1996-07-23)**

Remarks:
The file contains technical information submitted after the application was filed and not included in this specification

**Description**

The invention relates to a laminate having excellent oxygen gas barrier properties which is favorable for wrapping films such as food wrapping films, and to a method for producing it.

Various types of oxygen gas barrier films and wrapping materials comprising them are known. Aluminium (hereinafter referred to as Al) foil has perfect oxygen gas barrier properties, but when used by itself, it often has pin holes. Therefore, Al foil is used as interlayer of laminate films. However, since laminate films with Al foil are not transparent, the content wrapped therewith cannot be seen. Other problems therewith are that, after incineration, they give a residue of Al, and that metal detectors can not be applied for detecting metals in the content wrapped therewith.

As other oxygen gas barrier films, polyvinylidene chloride (hereinafter referred to as PVDC) films and PVDC-coated films are known. PVDC absorbs little moisture and exhibits good gas barrier properties even in high-humidity conditions, and is therefore used for coating various substrates. The substrates to be coated with PVDC include films of, for example, biaxially-oriented polypropylene (hereinafter referred to as OPP), biaxially-oriented nylon (ON), biaxially-oriented polyethylene terephthalate (OPET) and cellophane. However, PVDC-laminated films are problematic in that they generate hydrogen chloride gas when incinerated as waste.

As oxygen gas barrier films, also films of completely hydrolyzed, non-modified polyvinyl alcohol (hereinafter referred to as PVA) are known. PVA films exhibit excellent oxygen gas barrier properties under low humidity conditions. In general, however, they absorb much moisture, and their oxygen gas barrier properties are greatly degraded in high humidity conditions of a relative humidity of around 70 % or higher. Another problem with PVA films is that their adhesiveness to substrate films of OPP or OPET is low. For attenuating the moisture absorbability of PVA, some proposals have heretofore been made of, for example, using an ethylene-vinyl alcohol copolymer (hereinafter referred to as EVOH) having an ethylene comonomer content of at least 20 mol%, or coating both surfaces of PVA films with PDVC. However, since requiring solutions of organic solvents, EVOH coating is problematic in that the organic solvents used greatly worsen the working environments. On the other hand, PVDC-coated films are also problematic in that they generate hydrogen chloride gas when incinerated.

The following techniques are known, relating to the present invention.

(1) JP-A 4-331246 discloses gas barrier materials prepared by coating moisture-proof plastics (e.g., polyethylene or polypropylene) with a gas barrier substance capable of dissolving in water or solvents (e.g., polyvinyl alcohols having a degree of hydrolysis of at least 95 mol% or ethylene-vinyl alcohol copolymer having an ethylene content of from 28 to 51 mol%).

(2) JP-A 6-32924 discloses oxygen barrier films prepared by coating biaxially-oriented polypropylene films or biaxially-oriented polyester films with an aqueous solution of a polyvinyl alcohol having a degree of polymerization of from 300 to 1000 and a degree of hydrolysis of from 95 to 99.5 mol% thereby forming thereon a coat layer having a thickness of from 1.7 to 4 $\mu$m.

(3) US-A-4,927,689 discloses gas barrier structures as prepared by coating a thermoplastic resin substrate with a first coating layer of an urethane primer of from 0.3 to 3.0 g/m$^2$ and a second coating layer of a polyvinyl alcohol of at most about 2.0 g/m$^2$.

(4) The present applicant's own JP-A 8-188624 discloses self-sustaining films (preferred thickness: from 10 to 100 $\mu$m) of a modified polyvinyl alcohol that contains from 1 to 20 mol% of $\alpha$-olefin units with not more than 4 carbon atoms and has a degree of polymerization of at least 700.

(5) The present applicant's own JP-A 9-241999 discloses a coating agent for paper that comprises a modified polyvinyl alcohol containing from 3 to 15 mol% of ethylene units.

(6) US 4 544 698 describes laminate packages coated with a coating composition composed of a polyvinyl alcohol solution and a polymer latex for imparting gas and flavour tight packaging. It is furthermore mentioned that the presence of poly(vinylidene chloride) latexes is particularly advantageous because they contribute to gas tightness.

(7) EP 0 386 720 describes laminate packages coated with coating compositions comprising a saponified product of an ethylene vinyl acetate copolymer having an ethylene content of 20 to 80 mol%.

Object of the invention is to provide a laminate having excellent oxygen gas barrier properties and a method for producing it.

This object could be achieved by a laminate characterized by comprising (A) a layer of a water-soluble polyvinyl alcohol that contains from 3 to 19 mol% of $\alpha$-olefin units with not more than 4 carbon atoms and (B) a layer of a polyolefin, a polyester or a polyamide according to claim 1.

A method for producing the laminate, comprises applying an aqueous solution of a water-soluble polyvinyl alcohol that contains from 3 to 19 mol% of $\alpha$-olefin units with not more than 4 carbon atoms according to claim 1, with the solution containing at most 50 % by weight of a lower aliphatic alcohol, to the surface of a film of a polyolefin, a polyester or a polyamide.

A further method for the production of the laminate comprises applying an aqueous solution of a water- soluble polyvinyl alcohol that contains from 3 to 19 mol% of $\alpha$-olefin units with not more than 4 carbon atoms according to claim 1 to the surface of a film of a polyolefin, a polyester or a polyamide, followed by drying it at a drying speed that falls between 2 and 2000 g/m$^2$·min.

Polyvinyl alcohol (hereinafter referred to as PVA) for use in the invention is a water soluble PVA containing from 3 to 19 mol% of $\alpha$-olefin units with not more than 4 carbon atoms.

The meaning of "a water soluble PVA" in the present invention is that the PVA dissolves in an aqueous solution containing at most 50% by weight of a lower aliphatic alcohol. As $\alpha$-olefins, preferred are ethylene and propylene.

In PVA for use in the invention, the content of $\alpha$-olefin units with not more than 4 carbon atoms falls between 3 and 19 mol%, preferably between 5 and 16 mol%, more preferably between 7 and 14 mol%. If the content is smaller than 3 mol%, PVA films can not exhibit good barrier properties in high-humidity conditions; and if larger than 19 mol%, the water solubility of PVA is low and coating PVA in aqueous solution will be difficult.

The degree of hydrolysis of PVA for use in the invention preferably falls between 97 and 99.95 mol%, even more preferably between 99 and 99.90 mol%. PVA having a degree of hydrolysis of larger than 99.99 mol% is difficult to produce on an industrial scale, and, in addition, its aqueous solution will often form a thin solid layer floating thereon. On the other hand, PVA having a degree of hydrolysis of smaller than 90 mol% will be disadvantageous as its films can not exhibit satisfactory gas barrier properties.

The degree of polymerization of PVA for use in the invention is between 100 and 400. PVA having a degree of polymerization of higher than 2000 is not preferred, since the viscosity of its aqueous solution is too high and the coating ability thereof is poor. PVA having a degree of polymerization of lower than 100 is also not preferred, since the strength of its films is low and pin holes are often formed in the films. The degree of polymerization of PVA is measured according to JIS K6726.

PVA for use in the invention contains from 3 to 19 mol% of $\alpha$-olefin units with not more than 4 carbon atoms. Preferably, it further contains silyl group-containing units in an amount of not larger than 5 mol%. The silyl group-containing unit content of PVA may be at most 5 mol%, more preferably at most 3 mol%, even more preferably between 0.1 mol% and 1.5 mol%. If the silyl group-containing unit content is larger than 5 mol%, the stability of PVA aqueous solution will be extremely low.

PVA for use in the invention may be prepared by any known method.

It is desirable that PVA for use in the invention contains sodium acetate in an amount of from 0.01 to 2 % by weight. The sodium acetate content of PVA preferably falls between 0.02 and 1 % by weight, more preferably between 0.03 and 0.5 % by weight, even more preferably between 0.03 and 0.45 % by weight. If the sodium acetate content oversteps the range falling between 0.01 and 2 % by weight, PVA films can hardly have good gas barrier properties.

It is desirable that the oxygen transmission rate of the films formed from the coating agent used in the invention, as measured according to a specific method mentioned below, is not higher than a specific value.

The oxygen transmission rate of PVA films as referred to herein may be measured as follows: A film as formed from the coating agent of the invention is heated in air (preferably at a temperature falling between 140 and 240°C, more preferably between 160 and 200°C, and at 180°C in a model test, for a period of time falling between 10 and 300 seconds, more preferably between 30 and 180 seconds, and for 120 seconds in the model test), and then conditioned at 20°C and at 85 % RH. Then, the oxygen transmission rate of the thus-processed film is measured, and the oxygen transmission rate of the film defined in the present invention is obtained by converting the measured value into the value for the film of the coating agent having a presumptive thickness of 20 $\mu$m.

For laminates comprising a layer of PVA, the oxygen transmission rate of the laminate is measured in the same manner as above, and the oxygen transmission rate of the laminate defined in the present invention is obtained by converting the measured value into the value for the PVA layer having a presumptive thickness of 20 $\mu$m. For the laminates, they exhibit their gas barrier properties after having been subjected to some heat treatment. Therefore, in measuring their oxygen transmission rate, the laminates do not require any additional heat treatment. In the laminates, the oxygen gas barrier properties of the substrate layer are much lower than those of the PVA layer of the coating agent of the invention. Therefore, the oxygen gas barrier properties of the laminates substantially depend on the oxygen gas barrier properties of the PVA layer in the laminates. Accordingly, even in the laminates, it is possible to calculate the oxygen transmission rate of the laminates, as the converted value for the PVA film of the coating agent having a presumptive thickness of 20 $\mu$m. Unless otherwise specifically indicated hereinunder, the oxygen transmission rate indicates the converted calculated value for the film of the coating agent having a presumptive thickness of 20 $\mu$m.

Regarding the oxygen gas barrier properties of the laminates of the invention, it is desirable that the laminates have an oxygen transmission rate as measured and defined according to the method mentioned above of at most 15 cc/m$^2$·day·atm, more preferably at most 10 cc/m$^2$·day·atm, even more preferably at most 5 cc/m$^2$·day·atm.

The oxygen gas barrier properties of the laminates of the invention are significantly improved, when the $\alpha$-olefin unit content of PVA used, the degree of hydrolysis thereof and also the sodium acetate content thereof are defined to fall within the preferred ranges.

The substrate films to be coated with the coating agent for a film of the invention include polyolefin films, polyester films and polyamide films.

It is desirable to incorporate silicon (Si) into the substrate film of polyolefin films, polyester films or polyamide films. The silicon content of the substrate film is preferably at most 2 % by weight, more preferably at most 1 % by weight, even more preferably between 0.1 and 0.5 % by weight. Polyolefin films, polyester films and polyamide films that contain silicon in an amount of from 0.1 to 2 % by weight can increase adhesiveness to films of the coating agent of the invention. Silicon is added to those films generally in the form of a silica compound. For this, employable are any known silica compounds such as silicon oxide or alkyl silicates. Of those, preferred is colloidal silica ($SiO_2$).

For adding a silica compound to the substrate film, generally employed is a method of mixing the compound with a resin to prepare a film forming composition that contains the compound.

The thickness of the substrate film (where the film is oriented, its final thickness) preferably falls between 5 and 100 $\mu$m.

The laminate of the invention is characterized by comprising (A) a layer of a water-soluble polyvinyl alcohol that contains from 3 to 19 mol% of $\alpha$-olefin units with not more than 4 carbon atoms and (B) a layer of a polyolefin, a polyester or a polyamide according to claim 1. In the laminate, preferably, the layer (A) has a surface smoothness, as measured according to the method mentioned below, of not larger than 50 $\mu$m/cm in terms of the sum total of the height of micro convexities existing in the surface of the layer (A).

Method for Measuring Surface Smoothness:

A substrate film is coated with PVA for the layer (A) and dried to prepare a laminate.

Next, the surface smoothness of the PVA layer (A) is measured with a universal surface profile meter, SE-3C Model from Kosaka Laboratories, to prepare a surface profile chart.

From the chart, the sum total, per cm, of the height of micro convexities in the surface of the layer (A) is derived, and this indicates the surface smoothness of the layer (A).

To produce the laminate by applying the coating agent for a film of the invention to a substrate film, the coating agent may be used by itself, but, for the purpose of making the resulting film to be water resistant, it is preferably combined with a crosslinking agent. The crosslinking agent includes, for example, epoxy compounds, isocyanate compounds, aldehyde compounds, silica compounds, aluminium compounds, zirconium compounds or boron compounds. Of those, preferred are silica compounds such as colloidal silica and alkyl silicates.

The amount of the crosslinking agent to be added may be generally from 5 to 60 parts by weight relative to 100 parts by weight of PVA, preferably from 10 to 40 parts by weight, more preferably from 15 to 30 parts by weight. If its amount is larger than 60 parts by weight, the crosslinking agent added will have some negative influences on the gas barrier properties of the laminate.

Where the coating agent for a film is applied to the substrate film to produce laminates, it is in the form of an aqueous solution containing it. The PVA concentration in the aqueous solution is not specifically defined, but is preferably from 5 to 50 % by weight. If the PVA concentration is smaller than 5 % by weight, the heat load for drying the coated film will be large; and if larger than 50 % by weight, the viscosity of the aqueous solution will be too high, thus degrading the coating ability.

The aqueous solution of the coating agent for a film may optionally contain e.g. a surfactant or a leveling agent. It may further contain a lower aliphatic alcohol, such as methanol, ethanol or isopropyl alcohol, in an amount of up to 50 % by weight or so. Adding such a lower aliphatic alcohol can improve the coating ability of the solution.

Further, the aqueous solution of the coating agent for a film may additionally contain e.g. a fungicide and a preservative.

The temperature at which an aqueous solution of the coating agent for a film is applied to a substrate film preferably falls between 20 and 80°C. For the coating, preferably employed are a gravure-roll coating method, a reverse-gravure coating method, a reverse-roll coating method, and a mayer-bar coating method.

For coating a substrate film with an aqueous solution of the coating agent for a film, the substrate film may be previously oriented or heat-treated and then coated with the solution, or, alternatively, the substrate film coated with the solution may be oriented or heat-treated. In view of its operability, preferred is a multi-stage coating method that comprises a step of first-stage orientation of a substrate film, a step of coating the thus-oriented substrate film with an aqueous solution of the coating agent for a film and a step of second-stage orientation of the coated film, in which the film is heat-treated during or after the second-stage orientation step.

The thickness of the layer of the coating agent as formed on the substrate film (where the coated film is oriented, its final thickness) preferably falls between 0.1 and 9 $\mu$m.

In the method of producing the laminate of the invention, the drying condition after the step of applying the aqueous solution of the coating agent to the substrate film is an important factor. Preferably, after an aqueous solution of a water-soluble polyvinyl alcohol containing from 3 to 19 mol% of $\alpha$-olefin units with not more than 4 carbon atoms is applied to the surface of a film of a polyolefin, a polyester or a polyamide, it is dried at a drying speed of from 2 to 2000 $g/m^2 \cdot min$. More preferably, the drying speed falls between 50 and 500 $g/m^2 \cdot min$.

In order to improve the adhesiveness between the PVA film layer of the coating agent and the substrate film layer, an adhesive component layer may be disposed therebetween. The adhesive component may be applied to the surface of the substrate film before the substrate film is coated with the PVA coating agent, or, alternatively, it may be mixed in the aqueous solution of the PVA coating agent before the coating agent is applied to the substrate film.

The gas barrier laminate film generally has a heat seal resin layer as formed on the PVA film layer. For forming the heat seal resin layer, in general, employed is extrusion lamination or dry lamination. As heat seal resins for the layer, employable are polyethylene resins such as HDPE, and LLDPE, as well as PP resins, ethylene-vinyl acetate copolymers, ethylene-α-olefin random copolymers and ionomer resins.

The orientation, if applied, of the films of the invention, and the temperature for heat treatment of the films are not specifically defined. In general, however, the coating agent for film of the invention is applied to a substrate film and then heated e.g. in air at a temperature suitable to resins for oriented polyolefin films, polyester films or polyamide films. The temperature for the heat treatment may fall between 140°C and 170°C for polyolefin films, and between 140°C and 240°C for polyester films and polyamide films. In general, the heat treatment for the film layer of the coating agent may be effected simultaneously with that for the substrate film.

It is desirable to vary the temperature for heat treatment in accordance with the melting point, Tm (°C) of PVA to be obtained through DSC. Preferably, the heat treatment temperature, T (°C) falls within the range that satisfies the following formula (1), more preferably within the range that satisfies the following formula (2).

$$Tm - 70 \leq T \leq Tm \qquad\qquad (1)$$

$$Tm - 50 \leq T \leq Tm - 20 \qquad\qquad (2)$$

The laminate of the invention exhibits excellent gas barrier properties, covering a broad humidity range of from low humidity to high humidity, and, in addition, its appearance is good and its ability to be formed into bags in high-speed working lines is also good.

Further, as having excellent oxygen gas barrier properties, the laminate of the invention is favorable for wrapping films such as food wrapping films. In addition, the laminate has the advantage of not generating harmful hydrogen chloride gas when incinerated.

EXAMPLES

The invention is described concretely with reference to the following Examples and Comparative Examples.

In the following Examples and Comparative Examples, "part" and "%" are by weight, unless otherwise specifically indicated. To measure their oxygen transmission rate (OTR, $cc/m^2 \cdot day \cdot atm$), the PVA-coated films (laminates composed of a substrate and PVA) were previously conditioned at a temperature of 20°C and at a relative humidity of 85 % for 5 days, and then tested. The oxygen transmission rate shown in the following Table indicates the converted calculated value for the film of the PVA coating agent having a presumptive thickness of 20 $\mu$m.

Examples 1 to 20, Comparative Example 1:

Polyvinyl alcohol (hereinafter referred to as PVA) shown in Table 1 was gradually added to water containing 7 % (but 0 % in Examples 2, 3, 18, 19 and 20% in Examples 4, 5, 6, 7, 17) of isopropyl alcohol, with stirring, and uniformly dispersed therein. Then, the resulting dispersion was heated at about 95°C to completely dissolve PVA therein. This was filtered and then cooled to prepare an aqueous PVA solution having a PVA concentration of 20 % (but 5 % in Examples 16 and 17).

Using a gravure coater, the PVA solution prepared above was applied to the surface of a substrate film having a thickness of 15 $\mu$m and shown in Table 2, at 50°C, then dried at 120°C, and thereafter subjected to heat treatment in air at a temperature shown in Table 2 for 120 seconds. The thickness of the PVA layer thus formed on the substrate film was 2.0 $\mu$m. The oxygen transmission rate of the PVA-coated film (laminate composed of the substrate film and the PVA layer) is shown in Table 2.

Comparative Example 2:

A laminate was produced in the same manner as in Example 1, except that a PVA film as prepared by casting an aqueous PVA solution was dry-laminated, using an isocyanate-based adhesive, on a substrate film having a thickness of 15 $\mu$m and shown in Table 2. The thickness of the PVA layer formed herein was 2.0 $\mu$m. The oxygen transmission rate of the laminate is shown in Table 2.

Table 1

| | PVA | | | | | | | Crosslinking Agent | |
| | α-olefin | | Other Modifying Group | | Degree of Polymerization | Degree of Hydrolysis (mol%) | Sodium Acetate Content(%) | Type | Amount Added (parts/PVA 100 parts) |
| | Type | Degree of Modification (mol%) | Type | Degree of Modification (mol%) | | | | | |
|---|---|---|---|---|---|---|---|---|---|
| Example 1* | ethylene | 3.5 | - | 0 | 600 | 98 | 0.4 | - | 0 |
| Example 2 | ethylene | 6 | - 0 | 0 | 400 | 98 | 0.4 | - | 0 |
| Example 3 | ethylene | 7.2 | - | 0 | 350 | 98 | 0.4 | - | 0 |
| Example 4 | ethylene | 12 | - 0 | 0 | 350 | 98 | 0.4 | - | 0 |
| Example 5 | ethylene | 13.8 | - | 0 | 350 | 98 | 0.4 | - | 0 |
| Example 6 | ethylene | 15.3 | - | 0 | 350 | 98 | 0.4 | - | 0 |
| Example 7 | ethylene | 17.2 | - | 0 | 350 | 98 | 0.4 | - | 0 |
| Example 8 | ethylene | 10.3 | - | 0 | 350 | 99.5 | 0.8 | - | 0 |
| Example 9 | ethylene | 10.3 | - | 0 | 350 | 99.5 | 0.45 | - | 0 |
| Example 10 | ethylene | 10.3 | - | 0 | 350 | 99.5 | 0.23 | - | 0 |
| Example 11 | ethylene | 10.3 | - | 0 | 350 | 99.5 | 0.18 | - | 0 |
| Example 12 | ethylene | 11.4 | - | 0 | 350 | 99.9 | 0.13 | - | 0 |
| Example 13 | ethylene | 11.4 | - | 0 | 350 | 99.9 | 0.12 | - | 0 |
| Example 14 | ethylene | 11.4 | - | 0 | 350 | 99.9 | 0.14 | - | 0 |
| Example 15* | ethylene | 5.2 | - | 0 | 1500 | 98.8 | 0.2 | - | 0 |
| Example 16* | ethylene | 7.9 | - | 0 | 800 | 98.7 | 0.21 | - | 0 |
| Example 17 | ethylene | 13.5 | - | 0 | 300 | 99.2 | 0.18 | - | 0 |
| Example 18* | ethylene | 8.3 | - | 0 | 500 | 99.8 | 0.13 | - | 0 |
| Example 19* | ethylene | 6 | - 0 | 0 | 450 | 99 | 0.15 | - | 0 |
| Example 20* | ethylene | 3.5 | - | 0 | 500 | 98 | 2.2 | - | 0 |
| Comp. Ex. 1 | ethylene | 2.5 | - | 0 | 500 | 98 | 0.8 | - | 0 |

(continued)

| | PVA | | | | | | | Crosslinking Agent | |
| | α-olefin | | Other Modifying Group | | Degree of Polymerization | Degree of Hydrolysis (mol%) | Sodium Acetate Content(%) | Type | Amount Added (parts/PVA 100 parts) |
| | Type | Degree of Modification (mol%) | Type | Degree of Modification (mol%) | | | | | |
| Comp. Ex. 2 | ethylene . | 10.2 | - | 0 | 500 | 98 | 0.5 | - | 0 |
| * Not part of the invention | | | | | | | | | |

EP 0 962 506 B1

Table 2

| | Substrate Film | | Laminate | | | |
|---|---|---|---|---|---|---|
| | Type | Amount of Colloidal Silica Added (%) | Anchor Coating Agent | Temperature for Heat Treatment (°C) | Method for Lamination | Oxygen Transmission Rate (cc/m$^2$·day·atm) |
| Example 1* | OPP | 0.4 | yes | 160 | aque.sol.coatng | 5.1 |
| Example 2 | OPP | 0.4 | yes | 160 | aque.sol.coatng | 4.8 |
| Example 3 | OPP | 0.4 | yes | 160 | aque.sol.coatng | 3.2 |
| Example 4 | OPP | 0.4 | yes | 160 | aque.sol.coatng | 3.2 |
| Example 5 | OPP | 0.4 | yes | 160 | aque.sol.coatng | 3 |
| Example 6 | OPP | 0.4 | yes | 160 | aque.sol.coatng | 3.8 |
| Example 7 | OPP | 0.4 | yes | 160 | aque.sol.coatng | 4.5 |
| Example 8 | OPP | 0.4 | yes | 160 | aque.sol.coatng | 3.8 |
| Example 9 | OPP | 0.4 | yes | 160 | aque.sol.coatng | 3.1 |
| Example 10 | OPP | 0.4 | yes | 160 | aque.sol.coatng | 1.8 |
| Example 11 | OPP | 0.4 | yes | 160 | aque.sol.coatng | 1.7 |
| Example 12 | OPP | 0.4 | yes | 160 | aque.sol.coatng | 1.6 |
| Example 13 | OPP | 0.4 | yes | 160 | aque.sol.coatng | 1.4 |
| Example 14 | OPP | 0.4 | yes | 160 | aque.sol.coatng | 1 |
| Example 15* | OPP | 0.4 | yes | 160 | aque.sol.coatng | 4.3 |
| Example 16* | OPP | 0.4 | yes | 160 | aque.sol.coatng | 4 |
| Example 17 | OPP | 0.4 | yes | 160 | aque.sol.coatng | 3.8 |
| Example 18* | ON | 0.8 | no | 180 | aque.sol.coatng | 2.6 |
| Example 19* | ON | 0.6 | no | 180 | aque.sol.coatng | 1.5 |
| Example 20* | OPP | 0 | yes | 160 | aque.sol.coatng | 8.9 |
| Comp. Ex. 1 | OPP | 0 | yes | 160 | aque.sol.coatng | 20.6 |
| Comp. Ex. 2 | OPP | 0 | yes | 160 | dry lamination | 18.3 |
| OPP: Biaxially-oriented polypropylene film ON: Biaxially-oriented nylon film * Not part of the invention | | | | | | |

Examples 21 to 27, Comparative Examples 3 and 4:

Laminates were produced in the same manner as in Example 1, except that a crosslinking agent shown in Table 3 was added to the PVA layer. The thickness of the PVA layer formed was 3.0 μm. The oxygen transmission rate of each laminate is shown in Table 4.

Table 3

| | PVA | | | | | | | Crosslinking Agent | |
| | α-olefin | | Other Modifying Group | | Degree of Polymerization | Degree of Hydrolysis (mol%) | Sodium Acetate Content(%) | Type | Amount Added (parts/PVA 100 parts) |
| | Type | Degree of Modification (mol%) | Type | Degree of Modification (mol%) | | | | | |
|---|---|---|---|---|---|---|---|---|---|
| Example 21 | ethylene | 10 | - | 0 | 350 | 99.2 | 0.3 | glyoxal | 15 |
| Example 22 | ethylene | 8 | silyl group | 0.2 | 350 | 99.0 | 0.3 | colloidal silica | 5 |
| Example 23 | ethylene | 8 | silyl group | 0.2 | 350 | 99.0 | 0.3 | colloidal silica | 10 |
| Example 24 | ethylene | 8 | silyl group | 0.2 | 350 | 99.0 | 0.3 | colloidal silica | 20 |
| Example 25 | ethylene | 8 | silyl group - | 0.2 | 350 | 99.0 | 0.3 | colloidal silica | 30 |
| Example 26 | ethylene | 8 | silyl group | 0.2 | 350 | 99.0 | 0.3 | colloidal silica | 40 |
| Example 27 | ethylene | 8 | silyl group | 0.2 | 350 | 99.0 | 0.3 | colloidal silica | 55 |
| Comp. Ex. 3 | - | 0 | - | 0 | 400 | 99.8 | 0.4 | glyoxal | 15 |
| Comp. Ex. 4 | - | 0 | silyl group | 0.2 | 400 | 99.1 | 0.3 | colloidal silica | 25 |

EP 0 962 506 B1

Table 4

|  | Substrate Film | | Laminate | | | |
|---|---|---|---|---|---|---|
|  | Type | Amount of Colloidal Silica Added (%) | Anchor Coating Agent | Temperature for Heat Treatment (°C) | Method for Lamination | Oxygen Transmission Rate (cc/m$^2$·day·atm) |
| Example 21 | OPP | 0 | yes | 140 | aque.sol.coatng | 4.8 |
| Example 22 | OPP | 0 | yes | 140 | aque.sol.coatng | 4.9 |
| Example 23 | OPP | 0 | yes | 140 | aque.sol.coatng | 4 |
| Example 24 | OPP | 0 | yes | 140 | aque.sol.coatng | 3.3 |
| Example 25 | OPP | 0 | yes | 140 | aque.sol.coatng | 3.2 |
| Example 26 | OPP | 0 | yes | 140 | aque.sol.coatng | 4.3 |
| Example 27 | OPP | 0 | yes | 140 | aque.sol.coatng | 5.3 |
| Comp. Ex. 3 | OPP | 0 | yes | 140 | aque.sol.coatng | 20.4 |
| Comp. Ex. 4 | OPP | 0 | yes | 140 | aque.sol.coatng | 16.8 |

Examples 28 to 47:

An aqueous solution of PVA shown in Table 5 was prepared in the same manner as in Example 1 except that water containing 20% by weight of isopropyl alcohol was used in Examples 31,32,36,37,41,42,46,47 instead of water containing 7% by weight of isopropyl alcohol. Next, at 50°C, the aqueous PVA solution was applied to a substrate film of OPET having a thickness of 15 $\mu$m, using a gravure coater, then dried at 120°C, and thereafter subjected to heat treatment in air at a temperature shown in Table 6 for 120 seconds. The thickness of the PVA layer thus formed on the substrate film was 1.2 $\mu$m. The oxygen transmission rate of the PVA-coated film is shown in Table 6.

Table 5

| | PVA | | | | | | | Crosslinking Agent | |
| | α-olefin | | Other Modifying Group | | Degree of Polymerization | Degree of Hydrolysis (mol%) | Sodium Acetate Content(%) | Type | Amount Added (parts/PVA 100 parts) |
| | Type | Degree of Modification (mol%) | Type | Degree of Modification (mol%) | | | | | |
|---|---|---|---|---|---|---|---|---|---|
| Example 28 | ethylene | 5 | - | 0 | 350 | 99.2 | 0.3 | - | 0 |
| Example 29 | ethylene | 7 | - | 0 | 350 | 99.2 | 0.3 | - | 0 |
| Example 30 | ethylene | 10 | - | 0 | 350 | 99.2 | 0.3 | - | 0 |
| Example 31 | ethylene | 13 | - | | 350 | 99.2 | 0.3 | - | 0 |
| Example 32 | ethylene | 17 | - | 0 | 350 | 99.2 | 0.3 | - | 0 |
| Example 33 | ethylene | 5 | - | 0 | 350 | 99.2 | 0.3 | - | 0 |
| Example 34 | ethylene | 7 | - | 0 | 350 | 99.2 | 0.3 | - | 0 |
| Example 35 | ethylene | 10 | - | 0 | 350 | 99.2 | 0.3 | - | 0 |
| Example 36 | ethylene | 13 | - | 0 | 350 | 99.2 | 0.3 | - | 0 |
| Example 37 | ethylene | 17 | - | 0 | 350 | 99.2 | 0.3 | - | 0 |
| Example 38 | ethylene | 5 | - | 0 | 350 | 99.2 | 0.3 | - | 0 |
| Example 39 | ethylene | 7 | - | 0 | 350 | 99.2 | 0.3 | - | 0 |
| Example 40 | ethylene | 10 | - | 0 | 350 | 99.2 | 0.3 | - | 0 |
| Example 41 | ethylene | 13 | - | 0 | 350 | 99.2 | 0.3 | - | 0 |
| Example 42 | ethylene | 17 | - | 0 | 350 | 99.2 | 0.3 | - | 0 |
| Example 43 | ethylene | 5 | - | 0 | 350 | 99.2 | 0.3 | - | 0 |
| Example 44 | ethylene | 7 | - | 0 | 350 | 99.2 | 0.3 | - | 0 |
| Example 45 | ethylene | 10 | - | 0 | 350 | 99.2 | 0.3 | - | 0 |
| Example 46 | ethylene | 13 | - | 0 | 350 | 99.2 | 0.3 | - | 0 |
| Example 47 | ethylene | 17 | - | 0 | 350 | 99.2 | 0.3 | - | 0 |

EP 0 962 506 B1

Table 6

| | Substrate Film | | Laminate | | | |
|---|---|---|---|---|---|---|
| | Type | Amount of Colloidal Silica Added (%) | Anchor Coating Agent | Temperature for Heat Treatment (°C) | Method for Lamination | Oxygen Transmission Rate (cc/m$^2$-day-atm) |
| Example 28 | OPET | 0 | yes | 140 | aque.sol.coatng | 7.2 |
| Example 29 | OPET | 0 | yes | 140 | aque.sol.coatng | 6.7 |
| Example 30 | OPET | 0 | yes | 140 | aque.sol.coatng | 6.3 |
| Example 31 | OPET | 0 | yes | 140 | aque.sol.coatng | 6.0 |
| Example 32 | OPET | 0 | yes | 140 | aque.sol.coatng | 5.9 |
| Example 33 | OPET | 0 | yes | 180 | aque.sol.coatng | 3.0 |
| Example 34 | OPET | 0 | yes | 180 | aque.sol.coatng | 2.9 |
| Example 35 | OPET | 0 | yes | 180 | aque.sol.coatng | 2.7 |
| Example 36 | OPET | 0 | yes | 180 | aque.sol.coatng | 2.7 |
| Example 37 | OPET | 0 | yes | 180 | aque.sol.coatng | 2.9 |
| Example 38 | OPET | 0 | yes | 200 | aque.sol.coatng | 1.2 |
| Example 39 | OPET | 0 | yes | 200 | aque.sol.coatng | 1.1 |
| Example 40 | OPET | 0 | yes | 200 | aque.sol.coatng | 1.2 |
| Example 41 | OPET | 0 | yes | 200 | aque.sol.coatng | 2.8 |
| Example 42 | OPET | 0 | yes | 200 | aque.sol.coatng | 3 |
| Example 43 | OPET | 0 | yes | 230 | aque.sol.coatng | 0.8 |
| Example 44 | OPET | 0 | yes | 230 | aque.sol.coatng | 1.1 |
| Example 45 | OPET | 0 | yes | 230 | aque.sol.coatng | 1.2 |
| Example 46 | OPET | 0 | yes | 230 | aque.sol.coatng | 2.8 |
| Example 47 | OPET | 0 | yes | 230 | aque.sol.coatng | 3.2 |
| OPET: Biaxially-oriented polyethylene terephthalate film | | | | | | |

Examples 48 to 51:

An aqueous solution of PVA shown in Table 7 was prepared in the same manner as in Example 1. Next, at 50°C, the aqueous PVA solution was applied to a substrate film of OPET having a thickness of 15 $\mu$m, using a gravure coater, then dried at 120°C, and thereafter subjected to heat treatment in air at a temperature shown in Table 8 for 120 seconds. The thickness of the PVA layer thus formed on the substrate film was 1. 5 $\mu$m. The oxygen transmission rate of the PVA-coated film is shown in Table 8.

Table 7

| | PVA | | | | | | | Crosslinking Agent | |
| | α-olefin | | Other Modifying Group | | Degree of Polymerization | Degree of Hydrolysis (mol%) | Sodium Acetate Content(%) | Type | Amount Added (parts/PVA 100 parts) |
| | Type | Degree of Modification (mol%) | Type | Degree of Modification (mol%) | | | | | |
|---|---|---|---|---|---|---|---|---|---|
| Example 48 | ethylene | 10 | - | 0 | 350 | 98.5 | 1.5 | - | 0 |
| Example 49 | ethylene | 10 | - | 0 | 350 | 99.2 | 0.6 | - | 0 |
| Example 50 | ethylene | 10 | - | 0 | 350 | 99.6 | 0.12 | - | 0 |
| Example 51* | ethylene | 10 | - | 0 | 350 | 99.98 | 0.02 | - | 0 |
| *Not part of the invention | | | | | | | | | |

Table 8

| | Substrate Film | | Laminate | | | |
|---|---|---|---|---|---|---|
| | Type | Amount of Colloidal Silica Added (%) | Anchor Coating Agent | Temperature for Heat Treatment (°C) | Method for Lamination | Oxygen Transmission Rate (cc/m$^2$·day·atm) |
| Example 48 | OPET | 0 | yes | 180 | aque.sol.coatnng | 7.8 |
| Example 49 | OPET | 0 | yes | 180 | aque.sol.coatng | 3.2 |
| Example 50 | OPET | 0 | yes | 180 | aque.sol.coatng | 1.5 |
| Example 51* | OPET | 0 | yes | 180 | aque.sol.coatng | 0.4 |
| *Not part of the invention | | | | | | |

Example 52 *(Not part of the invention):

A modified PVA having an ethylene unit content of 8 mol%, a degree of hydrolysis of 98.8 mol% and a degree of polymerization of 550 was added to water, and uniformly dispersed therein. Then, the resulting dispersion was heated at about 95°C to completely dissolve the PVA therein. This was filtered and then cooled to prepare an aqueous PVA solution having a PVA concentration of 20 %.

Using a gravure coater, the PVA solution prepared above was applied to a substrate film of OPP having a thickness of 15 $\mu$m, at 50°C, then dried at 100°C. In the drying step, the drying speed was 100 g/m$^2$·min.

The oxygen transmission rate of the laminate film was measured.

Next, the surface smoothness of the laminate film was measured, using a universal surface profile meter, SE-3C Model from Kosaka Laboratories. The sum total, per cm, of the height of micro convexities in the surface of the laminate film was derived from the data measured, and this indicates the surface smoothness of the laminate film.

On the other hand, an adhesive for dry lamination was applied on the PVA-coated surface of the laminate film to form thereon an adhesive layer having a thickness of 1 $\mu$m, and a non-oriented polypropylene film (CPP) for lamination was laminated on the adhesive layer.

Two of the thus-prepared laminate films were placed one upon another with the surface of the CPP layer of one film facing that of the other, and subjected to a heat seal test at 180°C.

The test data are shown in Table 9.

Comparative Example 5:

The same process as in Example 52 was repeated, except that a non-modified PVA having a degree of hydrolysis of 98.3 mol% and a degree of polymerization of 500 was used.

The test data are shown in Table 9.

Comparative Example 6:

The same process as in Example 52 was repeated, except that an ethylene-vinyl alcohol copolymer (EVOH) having an ethylene unit content of 28 mol%, a degree of hydrolysis of 99.7 mol% and a degree of polymerization of 1000 was used, and that a mixed solvent of water/n-propyl alcohol (= 5/5) was used as the solvent.

The test data are shown in Table 9.

Table 9 - Data in Tests for Coating Agents (substrate: OPP)

| | Coating Agent[1] (thickness: 3 $\mu$m) | Oxygen Transmission Rate (cc/m$^2$·day·atm·20 $\mu$m·20°C) | | Surface Smoothness ($\mu$m) | Heat Sealability at 180°C |
|---|---|---|---|---|---|
| | | 65 %RH | 85 %RH | | |
| Example 52* | PVA (Et = 8 mol%) | 0.1 | 10 | 0 (with no streak) | good |
| Comparative Example 5 | Non-modified PVA (Et = 0 mol%) | 0.2 | 20 | 0 (with no streak) | good |
| Comparative Example 6 | EVOH (Et = 28 mol%) | 0.7 | 3 | 110 (with streaks) | deformed[2] |
| 1) Drying condition: at a temperature of 100°C and at a drying speed of 100 g/m$^2$·min. *Not part of the invention 2) Interlayer delamination found in the sealed laminate films. | | | | | |

**Claims**

1. A laminate **characterized by** comprising (A) a layer of a water-soluble polyvinyl alcohol containing from 3 to 19 mol% of $\alpha$-olefin units with not more than 4 carbon atoms and (B) a layer of a polyolefin, a polyester or a polyamide, wherein the water-soluble polyvinyl alcohol has a degree of hydrolysis of from 97 to 99.95 mol% and a degree of polymerization, measured according to JIS K6726, between 100 and 400.

2. The laminate as claimed in claim 1, wherein the thickness of the layer (A) falls between 0.1 and 9 $\mu$m.

3. The laminate as claimed in any one of claim 1 or 2, wherein the water-soluble polyvinyl alcohol contains from 0.01 to 2 % by weight of sodium acetate.

4. The laminate as claimed in any one of claims 1 to 3, wherein the water-soluble polyvinyl alcohol contains at most 5 mol% of silyl group-containing units.

5. The laminate as claimed in any one of claims 1 to 4 of which the oxygen transmission rate, indicating its oxygen gas barrier properties and measured after the laminate has been heated in air at a temperature falling between 140 and 240°C for a period of time falling between 10 and 300 seconds, and conditioned at 20°C and at 85 %RH and obtained by converting the measured value into the value for the water soluble polyvinyl alcohol layer(A) having a presumptive thickness of 20 $\mu$ m, is not larger than 15 cc/m$^2$·day·atm.

6. A method for producing the laminate of claim 1, which comprises applying an aqueous solution of a water-soluble polyvinyl alcohol that contains from 3 to 19 mol% of $\alpha$-olefin units with not more than 4 carbon atoms, with the solution containing at most 50 % by weight of a lower aliphatic alcohol, to the surface of a film of a polyolefin, a polyester or a polyamide, wherein the water-soluble polyvinyl alcohol has a degree of hydrolysis of from 97 to 99.95 mol% and a degree of polymerization, measured according to JIS K6726, between 100 and 400.

7. A method for producing the laminate of claim 1, which comprises applying an aqueous solution of a water- soluble polyvinyl alcohol that contains from 3 to 19 mol% of $\alpha$-olefin units with not more than 4 carbon atoms to the surface of a film of a polyolefin, a polyester or a polyamide, followed by drying it at a drying speed that falls between 2 and 2000 g/m$^2$·min, wherein the water-soluble polyvinyl alcohol has a degree of hydrolysis of from 97 to 99.95 mol% and a degree of polymerization, measured according to JIS K6726, between 100 and 400.

8. The method as claimed in claim 7. wherein the drying speed falls between 50 and 500 g/m$^2$·min.

**Patentansprüche**

1. Ein Laminat, **dadurch gekennzeichnet, dass** es (A) eine Schicht aus einem wasserlöslichen Polyvinylalkohol mit 3 bis 19 mol% $\alpha$-Olefin-Einheiten mit nicht mehr als 4 Kohlenstoffatomen und (B) eine Schicht aus einem Polyolefin, einem Polyester oder einem Polyamid umfasst, wobei der wasserlösliche Polyvinylalkohol einen Hydrolysegrad von 97 bis 99,95 Mol-% und einen gemäß JIS K6726 gemessenen Polymerisationsgrad zwischen 100 und 400 aufweist.

2. Das Laminat gemäß Anspruch 1, wobei die Dicke der Schicht (A) zwischen 0.1 und 9 $\mu$m beträgt.

3. Das Laminat gemäß einem der Ansprüche 1 oder 2, wobei der wasserlösliche Polyvinylalkohol 0,01 bis 2 Gew.% Natriumacetat enthält.

4. Das Laminat gemäß einem der Ansprüche 1 bis 3, wobei der wasserlösliche Polyvinylalkohol höchstens 5 Mol-% an Silylgruppen enthaltenden Einheiten enthält.

5. Das Laminat gemäß einem der Ansprüche 1 bis 4, dessen Sauerstoffdurchlassrate, die seine Sauerstoffgas-Sperreigenschaften angibt und gemessen wird, nachdem das Laminat bei einer Temperatur zwischen 140 und 240°C für einen Zeitraum von 10 bis 300 Sekunden an Luft erhitzt und bei 20 °C und 85% relativer Luftfeuchtigkeit konditioniert wurde, und die durch Umwandeln des gemessenen Werts in den Wert für die wasserlösliche Polyvinylalkoholschicht (A) mit einer mutmaßlichen Dicke von 20 $\mu$m erhalten wird, nicht größer als 15 cm$^3$/m$^2$·Tag·atm ist.

6. Ein Verfahren zur Herstellung des Laminats nach Anspruch 1, welches das Aufbringen einer wässrigen Lösung eines wasserlöslichen Polyvinylalkohols, der 3 bis 19 mol% $\alpha$-Olefin-Einheiten mit nicht mehr als 4 Kohlenstoffatomen enthält, wobei die Lösung höchstens 50 Gew.% eines niederen aliphatischen Alkohols enthält, auf die Oberfläche einer Folie aus einem Polyolefin, einem Polyester oder einem Polyamid umfasst, wobei der wasserlösliche Polyvinylalkohol einen Hydrolysegrad von 97 bis 99,95 Mol-% und einen gemäß JIS K6726 gemessenen Polymerisationsgrad zwischen 100 und 400 aufweist.

7. Ein Verfahren zur Herstellung des Laminats nach Anspruch 1, welches das Aufbringen einer wässrigen Lösung eines wasserlöslichen Polyvinylalkohols, der 3 bis 19 mol% $\alpha$-Olefin-Einheiten mit nicht mehr als 4 Kohlenstoffatomen enthält, auf die Oberfläche einer Folie eines Polyolefins, eines Polyesters oder eines Polyamids, gefolgt von Trocknen mit einer Trocknungsgeschwindigkeit, die zwischen 2 und 2000 g/m$^2$·min beträgt, umfasst, wobei der wasserlösliche Polyvinylalkohol einen Hydrolysegrad von 97 bis 99,95 Mol-% und einen gemäß JIS K6726 gemessenen Polymerisationsgrad zwischen 100 und 400 aufweist.

8. Das Verfahren gemäß Anspruch 7, wobei die Trocknungsgeschwindigkeit zwischen 50 und 500 g/m$^2$·min beträgt.

**Revendications**

1. Stratifié **caractérisé en ce qu'**il comprend (A) une couche d'un poly(alcool vinylique) soluble dans l'eau contenant de 3 à 19 mol% d'unités d'$\alpha$-oléfine n'ayant pas plus de 4 atomes de carbone et (B) une couche d'une polyoléfine, d'un polyester ou d'un polyamide, où le poly(alcool vinylique) soluble dans l'eau a un degré d'hydrolyse de 97 à 99,95 mol% et un degré de polymérisation, mesuré selon JIS K6726, entre 100 et 400.

2. Stratifié selon la revendication 1 où l'épaisseur de la couche (A) est située entre 0,1 et 9 $\mu$m.

3. Stratifié selon l'une quelconque des revendications 1 ou 2 où le poly(alcool vinylique) soluble dans l'eau contient de 0,01 à 2 % en poids d'acétate de sodium.

4. Stratifié selon l'une quelconque des revendications 1 à 3 où le poly(alcool vinylique) soluble dans l'eau contient au plus 5 mol% d'unités contenant un ou des groupes silyle.

5. Stratifié selon l'une quelconque des revendications 1 à 4 dont le taux de transmission d'oxygène, indiquant ses propriétés de barrière au gaz oxygène et mesuré après que le stratifié a été chauffé dans l'air à une température située entre 140 et 240°C pendant une durée située entre 10 et 300 secondes, et conditionné à 20°C et à une HR de 85 % et obtenu par conversion de la valeur mesurée en la valeur pour la couche de poly(alcool vinylique) soluble dans l'eau (A) ayant une épaisseur supposée de 20 $\mu$m, n'est pas supérieur à 15 cm$^3$/m$^2$·jour·atm.

**6.** Procédé pour produire le stratifié selon la revendication 1 qui comprend l'application d'une solution aqueuse d'un poly(alcool vinylique) soluble dans l'eau qui contient de 3 à 19 mol% d'unités d'$\alpha$-oléfine n'ayant pas plus de 4 atomes de carbone, la solution contenant au plus 50 % en poids d'un alcool aliphatique inférieur, à la surface d'un film d'une polyoléfine, d'un polyester ou d'un polyamide, où le poly(alcool vinylique) soluble dans l'eau a un degré d'hydrolyse de 97 à 99,95 mol% et un degré de polymérisation, mesuré selon JIS K6726, entre 100 et 400.

**7.** Procédé pour produire le stratifié selon la revendication 1 qui comprend l'application d'une solution aqueuse d'un poly(alcool vinylique) soluble dans l'eau qui contient de 3 à 19 mol% d'unités d'$\alpha$-oléfine n'ayant pas plus de 4 atomes de carbone à la surface d'un film d'une polyoléfine, d'un polyester ou d'un polyamide, suivie par son séchage à une vitesse de séchage qui est située entre 2 et 2000 g/m$^2$·min, où le poly(alcool vinylique) soluble dans l'eau a un degré d'hydrolyse de 97 à 99,95 mol% et un degré de polymérisation, mesuré selon JIS K6726, entre 100 et 400.

**8.** Procédé selon la revendication 7 où la vitesse de séchage est située entre 50 et 500 g/m$^2$·min.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4331246 A
- JP 6032924 A
- US 4927689 A
- JP 8188624 A
- JP 9241999 A
- US 4544698 A
- EP 0386720 A